# EUROPÄISCHE PATENTSCHRIFT

(11) **EP 4 301 574 B1**
(45) Veröffentlichungstag und Bekanntmachung des Hinweises auf die Patenterteilung: **04.12.2024**
(21) Anmeldenummer: 22723959.7
(22) Anmeldetag: 12.03.2022
(51) Int. Cl.: B29C 45/76, B29C 45/17

(54) **VERFAHREN ZUR VERMEIDUNG VON PARALLELITÄT VON LASTSPITZEN EINER KUNSTSTOFFVERARBEITUNGSMASCHINE, INSBESONDERE SPRITZGIESSMASCHINE ODER FORMGEBUNGSMASCHINE, SOWIE KUNSTSTOFFVERARBEITUNGSANLAGE**
METHOD FOR AVOIDING PARALLELISM OF LOAD PEAKS OF A PLASTIC-PROCESSING MACHINE, MORE PARTICULARLY AN INJECTION MOLDING MACHINE OR SHAPING MACHINE, AND PLASTIC-PROCESSING SYSTEM
PROCÉDÉ POUR ÉVITER UN PARALLÉLISME DE POINTES DE CHARGE D'UNE MACHINE DE TRANSFORMATION DE MATIÈRES PLASTIQUES, EN PARTICULIER D'UNE MACHINE DE MOULAGE PAR INJECTION OU D'UNE MACHINE DE FORMAGE, ET INSTALLATION DE TRANSFORMATION DE MATIÈRES PLASTIQUES

(30) Priorität: 02.04.2021 AT 502362021
(43) Veröffentlichungstag der Anmeldung: 10.01.2024
(73) Patentinhaber: Wittmann Technology GmbH, 1220 Wien (AT)
(72) Erfinder: WITTMANN, Michael Peter, 2100 Leobendorf (AT)
(74) Vertreter: Felfernig, Oliver
(86) Internationale Anmeldenummer: PCT/AT2022/060074
(87) Internationale Veröffentlichungsnummer: WO 2022/204739

(56) Entgegenhaltungen:
- EP-A1- 2 674 277
- EP-A1- 3 255 513
- EP-A2- 3 915 755
- WO-A1-2013/143585
- DE-A1- 102013 009 607
- US-A1- 2014 163 763

## Beschreibung

Die Erfindung betrifft ein Verfahren zur Vermeidung von Parallelität von Lastspitzen einer Kunststoffverarbeitungsmaschine, insbesondere Spritzgießmaschine oder Formgebungsmaschine, sowie einer Kunststoffverarbeitungsanlage, wie es in den Ansprüchen 1 bis 11 beschrieben ist.

Zu den wesentlichen laufenden Betriebsausgaben für Produktionsmittel für die Kunststofftechnik, insbesondere Spritzgießmaschine und Peripheriegeräte für die Temperierung, Aufheizung, Trocknung und/oder Kühlung von Werkzeug, Spritzgießmaschine und/oder zu verarbeitendem Material und somit zur Produktion von Spritzgießteilen zählen die Stromkosten. Als Bemessungsgrundlage für die bezogene Leistungsaufnahme wird in der Regel von den Energieversorgern ein Zeitintervall von 15 Minuten herangezogen. Jedoch entstehen bei leistungspreisabhängigen Stromverträgen nicht nur Kosten für die bezogene Wirkarbeit. Zusätzlich wird auch die höchste monatlich oder jährlich abgenommene Leistungsspitze ermittelt und in Rechnung gestellt. Dieser Anteil des Leistungspreises kann bis zu 30 Prozent der Gesamtstromkosten betragen. Eine Reduzierung der Stromkosten kann daher neben einer Verringerung des Stromverbrauchs auch durch die Absenkung von kurzfristigen Leistungsspitzen erfolgen.

Da der Spritzgießvorgang gemäß Auslegung einen diskontinuierlichen Produktionsablauf mit unterschiedlichen Phasen darstellt, ist eine kostenmäßig optimale, daher konstante Lastabnahme nicht erreichbar.

Am Markt befindliche Lösungen befassen sich mit dem Lastmanagement beim Hochfahren von Produktionsmitteln, wobei dem Lastmanagementsystem Vorgaben vorliegen, die typischerweise auf betriebswirtschaftlichen Kriterien und der Kenntnis und Priorität von Produktionsaufträgen beruhen. Insofern ist eine Kopplung dieser Art von ganzheitlichem Spitzenlastmanagement zu einem ERP (Enterprise Resource Planning) - System oder MES (Manufacturing Execution System) eine Notwendigkeit.

Einen unterschiedlichen Ansatz verfolgt DE 10 2012 111 046 A1. Hierbei wird ein Verfahren zur Begrenzung der maximalen Leistungsaufnahme einer Produktionsmaschine, insbesondere einer Spritzgießmaschine beschrieben. Eine Spritzgießmaschine besteht typischerweise aus einer Vielzahl an Leistungsaufnehmern, im gegenständlichen Verfahren Aggregate oder Aggregategruppen genannt, die je nach Funktionalität, zeitweise mit verminderter Leistungsaufnahme betrieben werden können, ohne eine Qualitätseinbuße auf das herzustellende Produkt zu verursachen. Besonders vorteilhaft ist das Verfahren beim Hochfahren (Aufheizen der einzelnen Aggregate/Aggregategruppen) einer Spritzgießmaschine, z.B. nach einem Wochenende, da sich die verminderte Leistungsaufnahme von Aggregaten/Aggregategruppen zur Begrenzung der momentanen Gesamtleistungsaufnahme als längere Aufheizphase bemerkbar macht, jedoch keinen Einfluss auf die Produktqualität hat. Das Verfahren kann auch im Regelbetrieb der Spritzgießmaschine, also im Betrieb zur Produktion von Teilen angewendet werden, speziell zur Begrenzung von vorhandenen Heizelementen an der Maschine (Zylinderheizung). Nachteilig ist jedoch, dass für die Leistungsaufnahme nur die Komponenten der Spritzgießmaschine berücksichtigt werden und die weiteren Peripheriegeräte, die für den Betrieb der Spritzgießmaschine notwendig sind, in keiner Weise einbezogen sind. Dabei kann es oftmals gerade in den Bereichen der größten Leistungsaufnahme der Spritzgießmaschine zu Überlagerungen bei der Energieaufnahme kommen.

Weiters ist aus der DE 10 2012 104 493 A1 ein übergeordnetes maschinenunabhängiges **Energiemanagementsystem ("Mastersystem")** bekannt, dass der Koordination der elektrischen Leistungsaufnahme mehrerer Produktionsmaschinen dient. Auch in diesem Fall wird das Mastersystem mit mehreren Produktionsmaschinen verbunden und greift dabei zumindest steuernd, gegebenenfalls auch regelnd in die Leistungsaufnahme zur Energieversorgung jeder der einzelnen Produktionsmaschinen ein. Dabei bezieht sich das Dokument auf Kunststoff verarbeitende Maschinen, nicht auf die notwendigen Peripherie- und Hilfsgeräte, die unabhängig und autark von der Produktionsmaschine betrieben werden.

Weiters ist aus der AT 12 820 U1 ein Verfahren zum Betreiben einer Gruppe von Spritzgießmaschinen bekannt, bei der der Energie- oder Leistungsbedarf jeder zu einer Gruppe gehörenden Spritzgießmaschine, durch eine Gruppensteuerung überwacht wird. Die Gruppensteuerung berechnet dabei laufend den Gesamtenergie- oder Leistungsbedarf der Gruppe und bei Erreichen oder Überschreiten eines vorgegebenen Grenzwertes, kann eine Energie- oder Leistungsbegrenzung bzw. Verschiebung an jede zur Gruppe gehörenden Spritzgießmaschine vorgenommen werden, um das Überschreiten eines vorgegeben Spitzenwertes zu verhindern bzw. abzustellen. Nachteilig bei diesem Verfahren ist die zeitweilige Verlängerung von Zykluszeiten einzelner Spritzgießmaschinen der Gruppe, da sich Maschinenzyklen typischerweise unterscheiden und eine Zyklusverschiebung einer Spritzgießmaschine somit immer wieder angewandt werden muss. Eine Verschiebung ist mit einer Zyklusverlängerung gleichzusetzen, die einerseits die Effizienz einer Spritzgießmaschine vermindert und andererseits unterschiedlich lange Zykluszeiten für die Produktion gleicher Teile zur Folge hat und somit Auswirkungen auf die Qualität der Teile haben kann.

Verfügbare Lösungen am Markt stellen weitreichende und umfassende Systeme für das Spitzenlastmanagement einer Maschine, einer Arbeitszelle, mehrerer Maschinen, mehrerer Arbeitszellen oder sämtlicher Produktionsmittel eines Betriebes dar. Bekannt sind Einrichtungen, die den Leistungsbedarf von Produktionsmitteln messen und an eine eigene zentrale Steuerung für das Lastmanagement übermitteln, wobei das Lastmanagement zwischen lastverschiebenden, lastreduktiven, lastflexibilisierten und lastexpansiven Steuerungsmaßnahmen unterscheiden kann bzw. eingestellt werden kann. Je nach Steuerungsmaßnahme werden entsprechende Leitsignale an die am Lastmanagement teilnehmenden Produktionsmittel gesendet.

Nachteilig ist bei diesem Verfahren der hohe Investitions- und Installationsaufwand, da sämtliche Teilnehmer, insbesondere Produktionsmittel, am Lastmanagement separat angeschlossen und mit Zusatzmitteln ausgestattet werden müssen.

Effektiv sind solche Systeme bei der Optimierung von Lastspitzen beim Hochfahren von Produktionsmitteln, da Parallelität der Last durch ein früheres oder späteres Einschalten von Produktionsmitteln verhindert werden kann.

Jedoch bewirken derartige Systeme während des regulären Produktionsbetriebes der Produktionsmittel keine meßbaren Stromeinsparungen, da nicht direkt in den Regelungsprozess von Produktionsmittel eingegriffen werden kann.

Weiters ist in der DE102013009607A1 ein Verfahren zum Betreiben von Energieverbrauchern einer Spritzgießmaschine beschrieben, wobei jedem Energieverbraucher ein Teilenergieverbrauch zugeteilt wird. Für alle Energieverbraucher zusammen wird ein Maximalenergieverbrauch festgelegt, wobei zur Vermeidung einer Überschreitung des festgelegten Maximalenergieverbraus zu einem ersten Zeitpunkt zumindest einem Energieverbraucher keine Energie zugeteilt wird. Dieses Verfahren funktioniert nur in solchen Fällen, in denen der Energieverbrauch der teilnehmenden Verbraucher bekannt und direkt regelbar ist. Das ist bei einer Spritzgießmaschine mit den typischen bauteilintegrierten Verbrauchern, wie Antriebseinheit, Heizelemente im Werkzeug (Heißkanäle), Heizvorrichtungen am Plastifizierzylinder und einem steuerungs- und antriebsseitig integrierten Handlingroboter der Fall, da diese Komponenten Bestandteile der Anlage bzw. Spritzgießmaschine mit bekannten Leistungskennlinien sind.

Aus der EP2674277A1 ist eine Spritzgießmaschine bekannt, die einen Zylinder aufweist, an dem ein Granulat zugeführt wird, wobei eine Vielzahl von Heizungen den Zylinder erwärmen. Eine Vielzahl von Temperatursensoren messen die jeweilige Temperatur der unterschiedlichen Heizzonen des Zylinders, wobei eine Steuerung vorgesehen ist, die die den Heizungen zugeführte elektrische Energie basierend auf einer Temperaturabweichung der gemessenen Temperatur der Temperatursensoren von einer Zieltemperatur unabhängig steuert, wobei die Steuerung eine den Heizungen zugeführte elektrische Gesamtleistung einstellt.

Weiters ist aus der WO2013143585A1 ein Verfahren und Vorrichtung zur Unterstützung bei der Erstellung einer energieeffizienten Steuerungssequenz einer industriellen Anlage oder eines Teils einer industriellen Anlage beschrieben, bestehend aus Anlagen-Komponenten, bei dem Anlagen-Komponenten logische Abhängigkeiten zu einer oder mehreren anderen Anlagen-Komponenten aufweisen können.

Bei der EP3255513A1 ist ein Verfahren zur Echtzeitbestimmung des Leistungsverlaufs und/oder Energieflusses einer Antriebseinrichtung mit mehreren miteinander über einen gemeinsamen Zwischenkreis verbundenen elektrischen Antrieben beschrieben. Das Verfahren hat die Schritte: - Ermitteln der jeweiligen elektrischen Antriebsleistung sowie der elektrischen Antriebe (A i) und bestimmen des Leistungsbedarfs (P N ) in Abhängigkeit von der Summe der ermittelten elektrischen Antriebsleistungen der miteinander über den gemeinsamen Zwischenkreis (Z) elektrisch verbundenen Antriebe.

Die US2014163763A1 beschreibt ein Verfahren zum Planen eines Gerätebetriebs. Das Verfahren umfasst das Empfangen einer Vielzahl von Signalen. Jedes Signal hat einen Spitzenzeitwert. Basierend auf der Mehrzahl von Signalen wird ein vorhergesagter Spitzenzeitwert bestimmt. Der vorhergesagte Spitzenzeitwert kann verwendet werden, um zu bestimmen, wann eine Geräteoperation auszuführen ist, um zu vermeiden, dass das Gerät während einer Spitzenzeitperiode betrieben wird.

Weiters ist aus der EP3915755A2 ein Managementverfahren zur Steuerung und/oder Regelung einer Gesamtanlage mit wenigstens zwei mit einem Zwischenkreis verbundenen Anlagenteilen geoffenbart. Dadurch, dass der Leistungsbedarf und/oder die Leistungsrückspeisung von wenigstens zwei Anlageteilen ermittelt und in Relation zueinander analysiert wird und daraufhin der Gesamtleistungsbedarf und/oder die Gesamtleistungsrückspeisung durch Steuerung und/oder Regelung wenigstens eines Anlagenteils so gesteuert und geregelt wird, dass der Gesamtleistungsbedarf und/oder die Gesamtleistungsrückspeisung der Gesamtanlage zu wenigstens einem bestimmten Zeitpunkt oder innerhalb wenigstens eines bestimmten Zeitintervalls kleiner gleich wenigstens einem vorgegebenen Wert, vorzugsweise kleiner gleich einem größten Maximum des Leistungsbedarfs und/oder der Leistungsrückspeisung des Anlagenteils ist, das zu dem wenigstens einem bestimmten Zeitpunkt oder innerhalb des wenigstens einen bestimmten Zeitintervalls das größte Maximum des Leistungsbedarfs und/oder der Leistungsrückspeisung aufweist, wird ein energieoptimierter Betrieb der Anlage gewährleistet.

Nachteilig ist beim vorgenannten Stand der Technik, dass Systeme beschrieben sind, deren Energieverbrauch der teilnehmenden Verbraucher immer bekannt sein muss.

Aufgabe der Erfindung ist ein Verfahren zur Vermeidung von Parallelität von Lastspitzen einer Kunststoffverarbeitungsmaschine, insbesondere Spritzgießmaschine oder Formgebungsmaschine, und an der Produktion beteiligter anderer Produktionsmittel zu ermöglichen, wobei die Spritzgießmaschine oder Formgebungsmaschine oder eine externe Arbeitszellensteuerung Steuersignale oder Betriebszustände an diese anderen Produktionsmittel übermittelt, damit diese ein entsprechendes Lastmanagement zur Vermeidung von Parallelität von Lastspitzen durchführen.

Die Aufgabe wird durch die Erfindung gelöst. Weitere erfindungsgemäße Lösungen sind in den Unteransprüchen beschrieben.

Das erfindungsgemäße Verfahren zur Vermeidung von Parallelität von Lastspitzen einer Kunststoffverarbeitungsmaschine, insbesondere Spritzgießmaschine und zumindest einem Produktionsmittel, ist dadurch gekennzeichnet, dass die Spritzgießmaschine oder die externe Arbeitszellensteuerung ein oder mehrere voreilende Steuersignale oder interne Betriebszustände mit erhöhtem Lastbedarf, an das oder die Produktionsmittel sendet, sodass das oder die autarken (unabhängigen) Produktionsmittel zu den Zeitpunkten des erhöhten Lastbedarfs der Spritzgießmaschine, eine Lastverschiebung, Lastminderung oder einen Lastabwurf durchführen.

Vorteilhaft ist dabei, dass für das Energiemanagement sämtliche Produktionsmittel berücksichtigt werden, wobei diese ihren Energiebedarf anhand der Vorgabe der Spritzgießmaschine anpassen, um ev. Summierungen zu vermeiden. Ein weiterer Vorteil liegt darin, dass Lastaktivitäten von den Produktionsmitteln derart gesteuert bzw. geregelt werden, dass diese in jenen Produktionsphasen der Spritzgießmaschine stattfinden, in denen das Lastniveau niedrig, jedenfalls unterhalb einer festgelegten oder selbst ermittelten Lastniveauschwelle liegt. Insbesondere können beispielsweise Heizstäbe vorgeheizt, vermindert oder verspätet eingeschaltet werden, um in den lastniveauüberscheitenden Phasen deaktiviert bzw. mit geringerer Energie versorgt zu werden.

Vorteilhaft ist das optionale Vorhandensein und die Nutzung einer externen Arbeitszellensteuerung, die eine Art Verbindungsstelle zwischen Spritzgießmaschine und anderen Produktionsmitteln, im speziellen Peripheriegeräten, beispielsweise Temperiergeräten, Heißkanalreglern, Kühlgeräten, Durchflussreglern, Granulat-Trocknern, Werkzeug-Trocknern, Dosiergeräten, Robotern, Automatisierungsanlagen, usw. also einer Produktionszelle, bildet. Da sich Produktionszellen je nach zu produzierendem Kunststoffteil, in der Zusammensetzung ändern können, ist eine übergeordnete Logik in Form einer externen Arbeitszellensteuerung, zur logischen Zusammenführung von Spritzgießmaschine und Peripheriegeräte von Vorteil. Die Arbeitszellensteuerung übernimmt in diesem Fall die Ermittlung der gerade angeschlossenen Peripheriegeräte und die Weiterleitung von etwaigen Steuersignalen und Betriebszuständen. Dabei nimmt die Arbeitszellensteuerung nach der Erkennung eines neuen Peripheriegerätes (Produktionsmittels) Kontakt mit diesem auf und erhält, unter anderem, den Gerätetyp und mögliche Spezifikationen. Ein Teil der Spezifikation könnte der Lastbedarf des gesamten Gerätes oder sogar einzelner Komponenten des Gerätes sein.

Von Vorteil ist eine Ausprägung der Arbeitszellensteuerung mit erweiterter Logik für das Lastmanagement der Peripheriegeräte. Dabei übernimmt die Arbeitszellensteuerung die prinzipielle Laststeuerung der Spritzgießmaschine und erweitert diese, sodass akkumulierte Lasten der Peripheriegeräte und die aktuelle Last der Spritzgießmaschine, zu keinem Zeitpunkt über die Lastspitze der Spritzgießmaschine gelangt.

Es sind aber auch die Maßnahmen von Vorteil, bei denen das Lastniveau für die Aktivierung des oder der Steuersignale oder die Veränderung des oder der internen Betriebszustände für die Übermittlung bzw. Anzeige des Vorhandenseins einer Lastspitze in der Spritzgießmaschine oder einer Arbeitszellensteuerung frei wählbar, einstellbar oder selbst ermittelt wird. Dadurch wird erreicht, dass der Betreiber der Maschinen oder Anlagen einerseits aktiv in das Lastmanagement eingreifen kann, wenn entsprechende Kenntnisse vorliegen oder dies automatisch von der Spritzgießmaschine oder der externen Arbeitszellensteuerung erledigen lässt.

Von Vorteil sind auch die Maßnahmen, bei denen die Spritzgießmaschine während eines oder mehrerer Arbeitszyklen, insbesondere dem Betrieb zwischen zwei aufeinander folgenden Schließvorgängen des Formwerkzeuges, das vorliegende Lastniveau laufend rechnerisch ermittelt oder messtechnisch erfasst und für nachfolgende Analysen, insbesondere für die Ermittlung der Umschaltung des oder der Steuersignale oder der internen Betriebszustände, speichert. Die erfassten Werte können in Diagrammform gemittelt oder ungemittelt dargestellt werden, um einen Betreiber eine manuelle Festlegung **der Umschaltpunkte für "hohen" Lastbedarf zu ermöglichen** oder zumindest grafisch darzustellen. Typischerweise wird jedoch eine Selbstermittlung der Umschaltpunkte des oder der Steuersignale oder des oder der internen Betriebszustände vorgenommen.

Von Vorteil sind auch die Maßnahmen, bei denen eine externe Arbeitszellensteuerung während eines oder mehrerer Arbeitszyklen der Spritzgießmaschine, insbesondere dem Betrieb zwischen zwei aufeinander folgenden Schließvorgängen des Formwerkzeuges, das vorliegende Lastniveau laufend messtechnisch erfasst und für nachfolgende Analysen, insbesondere für die Ermittlung der Umschaltung des oder der Steuersignale oder der internen Betriebszustände, speichert. Die erfassten Werte werden für die Selbstermittlung der Umschaltpunkte des oder der Steuersignale oder des oder der internen Betriebszustände verwendet.

Es sind aber auch die Maßnahmen von Vorteil, bei denen die Spritzgießmaschine oder eine externe Arbeitszellensteuerung das oder die Steuersignale oder interne Betriebszustände mit erhöhtem Lastbedarf auch voreilend aussenden bzw. anzeigen kann, damit die autarken Produktionsmittel entsprechende Aktionen zur Lastkontrolle vorbereiten können. Vorteilhaft ist dabei, dass damit die entsprechenden Produktionsmittel ausreichend Zeit für ihre Reorganisation des Steuer- bzw. Regelablaufes vornehmen können, um kurzfristiges Ein- und Ausschalten von Regelelementen und etwaige Abweichungen im Regelprozess zu verhindern.

Vorteilhaft sind die Maßnahmen, bei denen die autarken Produktionsmittel auch selbstlernend ausgeführt sind und von sich aus, vorzugsweise nach dem zumindest einmaligen Mitverfolgen des Verhaltens des oder der Steuersignale oder der internen Betriebszustände in einem Arbeitszyklus der Spritzgießmaschine, ein Auftreten einer Lastspitze bei der Spritzgießmaschine antizipativ vorsehen und selbsttätig eine Lastkontrolle vornehmen können. Vorteilhaft ist dabei, dass damit beispielsweise durch das vorzeitige Einschalten von trägeren Regelelementen, z.B. Heizungen und anschließendem, jedoch nur kurzfristigen, Ausschalten während der Dauer des erhöhten Lastbedarfes der Spritzgießmaschine, ein besseres Regelverhalten erzielt werden kann. Diese Lastaufteilung kann selbstverständlich nur optional zur Anwendung gebracht werden. Ebenso könnte das Peripheriegerät einzig und allein eine Lastverschiebung vornehmen, um eine höhere Schaltfrequenz der zu regelnden Elemente zu begrenzen.

Von Vorteil sind die Maßnahmen, bei denen bei Selbstermittlung der Umschaltpunkte des oder der Steuersignale oder der internen Betriebszustände in Abhängigkeit des Lastniveaus durch die Spritzgießmaschine oder eine externe Arbeitszellensteuerung das kumulative Anstehen des oder der Steuersignale oder der internen Betriebszustände für Lastspitzen die Zeit von zirka 15% bis 25% eines Gesamtzyklus der Spritzgießmaschine nicht übersteigt. Für die Betreiber von Spritzgießmaschinen und Peripheriegeräten ist die Selbstermittlung des Lastniveaus sehr praktikabel, da keinerlei Kenntnis des Prozesses oder dieser speziellen Funktionalität der Geräte vonnöten ist. Bei einer Selbstermittlung wird das Anstehen des oder der Steuersignale oder des oder der internen Betriebszustände für Lastspitzen auf eine Dauer von zirka 15% bis 25% eines Gesamtzyklus der Spritzgießmaschine begrenzt. Diese Vorgabe gewährleistet die Prozesssicherheit der Peripheriegeräte, da ausreichend Zeit für die Aktivierung der lastabnehmenden Komponenten zur Verfügung bleibt und aufgeschobene Prozesse nachgeholt werden können.

Von Vorteil sind die Maßnahmen, bei denen die Spritzgießmaschine die Differenz aus maximaler Lastspitze in einem Arbeitszyklus und aktuell errechneter oder gemessener Last oder einer anderen Größe, die direkt oder indirekt auf den aktuell nicht benötigten Lastbedarf schließen lässt, an eine Arbeitszellensteuerung meldet. Auch andere physikalische Größen, die direkt oder indirekt auf den aktuell nicht benötigten Lastbedarf der Spritzgießmaschine schließen lassen, können an eine externe Arbeitszellensteuerung gemeldet werden.

Alternativ kann die Differenz aus maximaler Lastspitze in einem Arbeitszyklus der Spritzgießmaschine und aktuell gemessener Last direkt in einer externen Arbeitszellensteuerung ermittelt werden, um damit den aktuell nicht benötigten Lastbedarf der Spritzgießmaschine zu bilden.

Vorteilhaft ist bei dieser Ausprägung, dass eine externe Arbeitszellensteuerung damit ein weitergehendes Lastmanagement realisieren kann, welches Peripheriegeräte gezielt für Lastabnahmen freigibt oder sperrt. Dabei kann die Lastabnahme eines Peripheriegerätes entweder in der Gerätekonfiguration spezifiziert sein oder durch den Betreiber eingestellt werden. Optional ist auch eine rechnerische Ermittlung oder messtechnische Erfassung der Lastabnahme möglich. Durch das gezielte, möglicherweise sequenzielle Aktivieren von Peripheriegeräten, wird sichergestellt, dass die maximale Lastspitze der Spritzgießmaschine, nicht durch die aktuelle Last der Maschine, sowie der kumulierten Last aller Peripheriegeräte nach der Lastspitze überschritten wird.

Von Vorteil sind die Maßnahmen, bei denen eine externe Arbeitszellensteuerung die Differenz aus maximaler Lastspitze in einem Arbeitszyklus der Spritzgießmaschine und aktuell gemessener Last der Spritzgießmaschine ermittelt und daraus den aktuell nicht benötigten Lastbedarf der Spritzgießmaschine bildet.

Es sind aber auch die Maßnahmen von Vorteil, bei denen eine externe Arbeitszellensteuerung das oder die Steuersignale zu unterschiedlichen Zeitpunkten an die autarken Produktionsmittel übermittelt und zwar in Abhängigkeit der Lastabnahme der jeweils aktiven Produktionsmittel, sodass die Gesamtlast der Produktionsmittel den von der Spritzgießmaschine nicht benötigen Lastbedarf nicht überschreitet.

Weiters wird die Aufgabe der Erfindung durch eine Kunststoffverarbeitungsanlage gelöst, bei der die Spritzgießmaschine oder Formgebungsmaschine und/oder eine externe Arbeitszellensteuerung zum Durchführen des Verfahrens nach einer der Ansprüche 1 bis 10 ausgebildet ist und die beteiligten weiteren Produktionsmittel die beschriebene Lastkontrolle zulassen. Vorteilhaft ist somit, dass Überschneiden von Lastspitzen einer Spritzgießmaschine und der an der Produktion beteiligter Produktionsmittel zu verhindern.

Die Erfindung wird anhand eines in den Zeichnungen dargestellten Ausführungsbeispiels näher erläutert, wobei die Erfindung nicht auf das beschriebene Ausführungsbeispiel beschränkt ist, sondern auf äquivalente Lösungen übertragbar ist.

Es zeigen:
- Fig. 1: ein Übersichtbild einer kunststoffverarbeitenden Industrieanlage, in vereinfachter, schematischer Darstellung;
- Fig. 2: eine schematische Darstellung eines Gesamtzyklus einer Energieaufnahme des primären Produktionsmittel, insbesondere der Spritzgießmaschine, in vereinfachter, schematischer Darstellung
- Fig. 3: eine schematische Darstellung des Gesamtzyklus gemäß Fig. 2 mit dargestellten Signalzeitpunkten für die Übersendung an die Produktionsmittel, in vereinfachter, schematischer Darstellung;

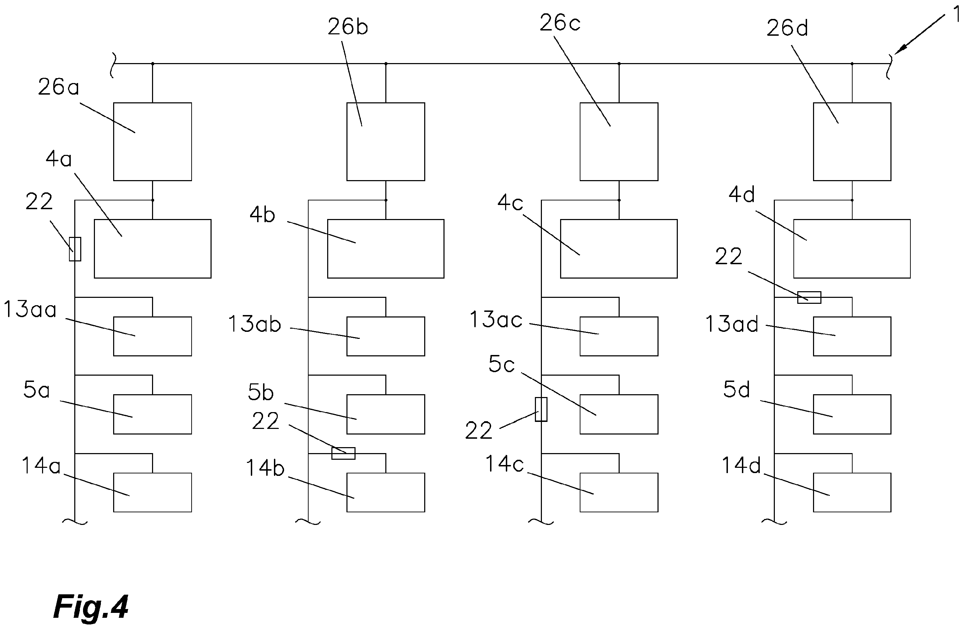

- Fig. 4: eine schematische Darstellung einer Kunststoffverarbeitungsanlage mit übergeordneten Arbeitszellensteuerungen, in vereinfachter, schematischer Darstellung;
- Fig. 5: ein Energiediagram mit Darstellung des Hochfahrens, Anfahrens und Regelbetriebes einer Spritzgießmaschine mit der jeweils gemittelten Energieaufnahme in einem jeweiligen Bewertungszeitraum von 5 Sekunden in vereinfachter, schematischer Darstellung;
- Fig. 6: ein Energiediagram mit Darstellung des Hochfahrens, Anfahrens und Regelbetriebes einer Spritzgießmaschine mit der jeweils maximalen Energieaufnahme in einem jeweiligen Bewertungszeitraum von 5 Sekunden in vereinfachter, schematischer Darstellung;

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

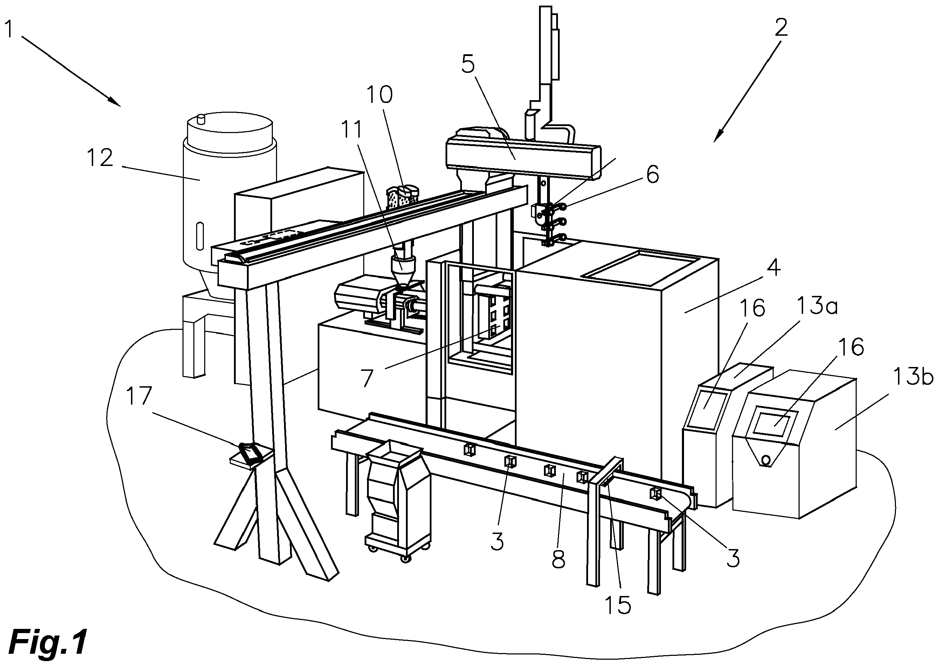

In der Fig. 1 ist eine Industrieanlage, insbesondere eine Arbeitszelle 1 bzw. Produktionszelle 1 für Spritzgießanwendungen gezeigt, bei der die einzelnen Produktionsmittel 2 bzw. Geräte 2 zum Erzeugen eines oder mehrerer Produkte/Halbprodukte oder Spritzgießteile 3 in der Arbeitszelle 1 zusammen geschaltet sind. Als Verarbeitungsmaschine wird vorzugsweise eine Spritzgießmaschine 4, eingesetzt, der ein Roboter 5 bzw. Handhabungsautomat zum Entnehmen des hergestellten Spritzgießteils 3 zugeordnet ist, wobei das Spritzgießteil 3 von einer Entnahmevorrichtung 6, insbesondere einem Greifer ausgestattet mit Greifzangen oder Saugdüsen, aus einem sich öffnenden Formwerkzeug 7 entnommen und auf eine Vorrichtung, beispielsweise ein Transportband 8, abgelegt wird. Um einen Spritzgießteil 3 herstellen zu können, wird Kunststoffgranulat 9 über ein Granulatfördergerät 10 und eventuell über ein Dosiergerät 11 der Spritzgießmaschine 4 zugeführt. Über ein Temperiergerät 13a und/oder Kühlgerät 13b kann die Spritzgussform durch Zuführung eines Temperiermediums auf Betriebstemperatur gehalten werden bzw. entsprechend geheizt oder gekühlt werden, sodass eine optimale Verarbeitung des Kunststoffgranulates 9, welches zum Einspritzen in das Formwerkzeug 7 plastifiziert werden muss, ermöglicht wird. Zusätzlich weist die Anlage eine Überwachungsvorrichtung 15, insbesondere ein Kamerasystem, auf, um eine automatische Qualitätskontrolle des erzeugten Produktes 3 durchführen zu können. Damit die einzelnen Geräte eingestellt bzw. programmiert werden können, weisen diese entsprechende Steuerelektronik bzw. Steuerlogik auf, die über an den Geräten angeordneten Displays 16 oder Steuerungen 17 eingegeben und angezeigt werden. Der Vollständigkeit halber wird weiters erwähnt, dass sämtliche Geräte mit entsprechenden Leitungen, insbesondere Spannungsversorgung, Netzwerkleitungen, Flüssigkeitsversorgungsleitungen, Materialleitungen usw. verbunden sind, die in der gezeigten Darstellung der übersichtshalber nicht dargestellt wurden.

Eine Produktionszelle 1 zur Herstellung von Spritzgießteilen 3 besteht also nicht nur aus der Produktionsmaschine 4, sondern zusätzlich aus den unterschiedlichsten Produktionsmitteln 2, im speziellen Peripheriegeräten, z.B. Temperiergeräte 13a und/oder Kühlgeräte 13b, Heizkanalsysteme, Granulat-Trockner 12, Werkzeug-Trockner, Dosiergeräte 11, Roboter 5, Automatisierungs-systeme, etc. Die Produktionsmittel 2 verwenden im Regelfall interne, also direkt in die Steuerung des Produktionsmittels 2 integrierte Sensoren, oder externe Sensoren, die wiederum über Direktverdrahtung oder eine Geräteschnittstelle an die Steuerungslogik des Produktionsmittels 2 angeschlossen sind. Diese Sensoren übertragen analoge oder diskrete Zustände, die in weiterer Folge Aktuatoren im Produktionsmittel 2 auslösen, um das für die Funktionalität des Produktionsmittels 2 notwendige Verhalten zu bewirken.

In allen Fällen operieren die Produktionsmittel 2 im Sinne des Lastbedarfes unabhängig voneinander und rufen die internen Verbraucher nach den Notwendigkeiten der eigenen Regelungslogik bzw. Steuerlogik und zur Erfüllung der jeweiligen Funktionalität ab. Stand der Technik ist weiters, dass die Produktionsmittel 2 auch dann im Sinne des Lastbedarfes, insbesondere der Energieaufnahme, unabhängig voneinander ablaufen, auch wenn diese optional steuerungsseitig über diskrete Signale oder Datenschnittstellen gekoppelt sein sollten.

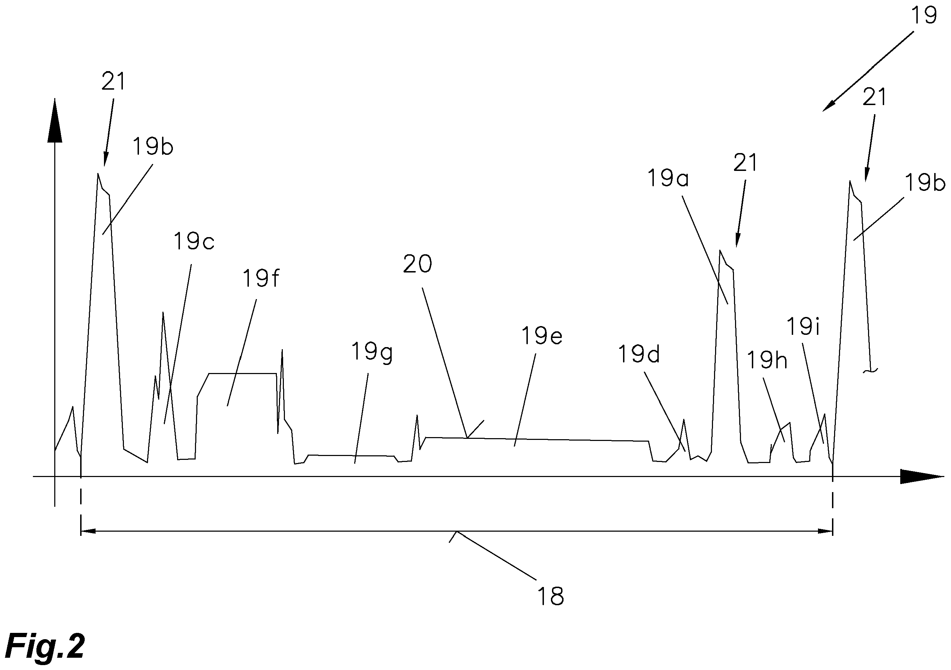

Das primäre Produktionsmittel 2 der Produktionszelle 1 für die Produktion von Spritzgießteilen 3 stellt die Spritzgießmaschine 4 dar, wie dies in einem Leistungsdiagramm in Fig. 2 dargestellt wurde.

Die Spritzgießmaschine 4 bestimmt einerseits den Gesamtzyklus 18 der Produktion und beeinflusst durch die unterschiedlichen Produktionsphasen 19, insbesondere Öffnen 19a und Schließen 19b des Formwerkzeuges, Schließkraftaufbau 19c und Schließkraftabbau 19d, Dosieren 19e mit Plastifizierung des zu verarbeitenden Materials, Einspritzen 19f, Kühlen 19g, Auswerferbewegung vor 19h und Auswerferbewegung zurück 19i das Verhalten der weiteren Produktionsmittel 2 in der Produktionszelle 1. Der Vollständigkeit halber wird erwähnt, dass sich derartige Zyklen, insbesondere Gesamtzyklen 18, wiederholen und weitere nicht dargestellte Abläufe in diesem Gesamtzyklus 18 enthalten sein können.

In einem konstanten Regelbetrieb der Spritzgießmaschine 4, d.h. wenn Spritzgießteile 3 produziert werden, nähert sich die Lastabnahmekurve 20 einer zwar relativ deterministischen Form an, die jedoch von einigen wenigen Lastspitzen und relativ langen Phasen von geringerem Lastverbrauch geprägt ist, wie dies aus Fig. 2 ersichtlich ist. Der Lastbedarf, insbesondere die Lastabnahmekurve 20, hängt sehr stark von der Maschinengröße, Ausstattung und vom eingespannten Formwerkzeug ab, da beispielsweise Spritzgießmaschinen 4 mit einer kleineren Schließkraft beim Verfahren der beweglichen Formwerkzeughälfte eine geringere Lastspitze als eine Spritzgießmaschine 4 mit sehr hoher Schließkraft und entsprechend schwerer beweglicher Formwerkzeughälfte aufweisen können. Die Lastabnahmekurve 20 hängt auch sehr stark von der mechanischen und elektrischen Bauweise der Spritzgießmaschine 4 ab. Eine Phase mit besonders niedriger Lastabnahme ist in jedem Spritzgießzyklus die Kühlzeit 19g.

Die anderen Produktionsmittel 2 einer Produktionszelle 1 weisen wesentlich uneinheitlichere Verläufe auf, wobei die Lastabnahme eines einzelnen Gerätes typischerweise wesentlich unter der Lastspitze 21 der Spritzgießmaschine 4 liegt. Da alle Produktionsmittel 2 im Sinne des Lastbedarfes unabhängig voneinander arbeiten, kommt es unweigerlich zu Parallelität beim Lastbedarf.

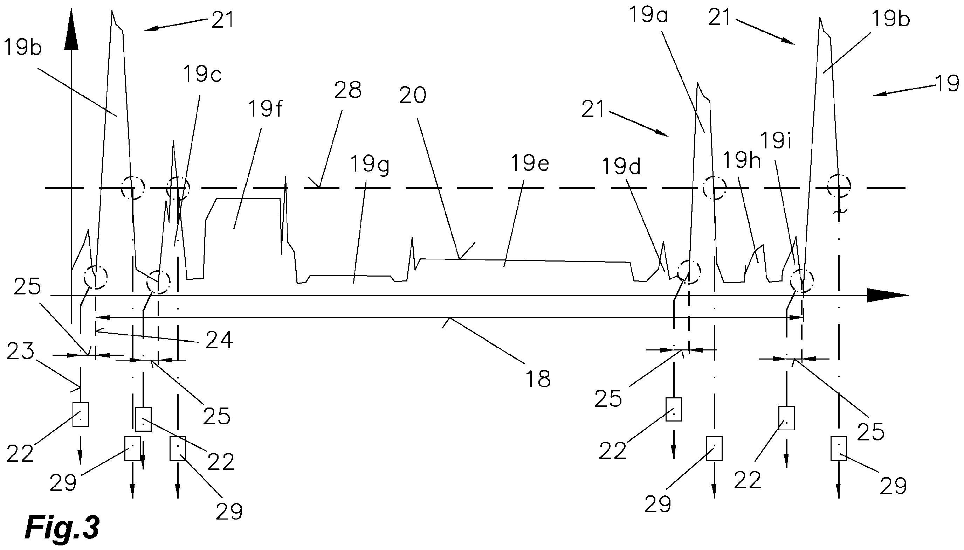

Erfindungsgemäß ist hierzu vorgesehen, dass die Spritzgießmaschine 4 oder Formgebungsmaschine ein voreilendes Steuersignal 22, oder einen internen Betriebszustand 22 mit erhöhtem Lastbedarf, wie schematisch in Fig. 3 dargestellt, an die Produktionsmittel 2 sendet, sodass das zumindest eine Produktionsmittel zu den Zeitpunkten des erhöhten Lastbedarfs der Spritzgießmaschine 4, eine Lastverschiebung, Lastminderung oder einen Lastabwurf durchführt, d.h., dass von der Spritzgießmaschine 4 zu einem Zeitpunkt 23 der zu einem späteren Zeitpunkt 24 durchgeführten Arbeitsschritt bzw. die Produktionsphase 19 das Steuersignal 22 bzw. die Informationen 22 an das entsprechende Produktionsmittel 2 oder an alle Produktionsmitteln 2 übersendet, sodass diese ihre Regelungen bzw. Steuerung entsprechend an den zu erwartenden Lastbedarf anpassen, insbesondere verschieben bzw. reduzieren. Dabei kann je nach darauffolgender Produktionsphase 19 die voreilende Zeitdauer 25 unterschiedlich sein, wie dies schematisch in Fig. 3 dargestellt wurde.

Erreicht wird das unter anderem dadurch, dass der Energiebedarf und das Lastaufkommen der Spritzgießmaschine in gewisser Weise im Regelbetrieb vorhersehbar ist und dieses Wissen von den angeschlossenen Produktionsmitteln 2 für eine bessere Lastminimierung oder Verschiebung verwendet werden kann. Ein Regelbetrieb ist der Zustand von Maschine 4 und Produktionsmitteln 2 nach dem jeweiligen Hochfahren oder Einschalten, also im Regelfall, wenn Spritzgießteile 3 produziert werden.

Dabei ist es notwendig, dass eine datentechnische Anbindung der Spritzgießmaschine 4 an zumindest ein Produktionsmittel 2, idealerweise an möglichst viele Produktionsmittel 2, die für den Betrieb des jeweiligen Formwerkzeuges 7 notwendig sind, vorgesehen ist, um die entsprechenden Informationen 22 zu übersenden. Grundsätzlich ist es aber auch möglich, dass ein entsprechend eingestellter oder aufgenommener Gesamtzyklus 18 in den Produktionsmitteln 2 hinterlegt bzw. gespeichert wird, sodass lediglich ein Steuersignal 22 voreilend, also eine Zeitdauer 25 bevor die Produktionsphase 19 mit Lastspitze 21 durchgeführt wird, aussendet, da die Produktionsmittel 2 aus den hinterlegten Gesamtzyklus 18 die bevorstehende bzw. nächste Produktionsphase 19 ermitteln können. Die datentechnische Anbindung ist im einfachsten Fall als diskrete Signalleitung 22 ausgebildet, um zumindest ein Signal von der Spritzgießmaschine 4 an das zumindest eine und/oder die weiteren angeschlossenen Produktionsmittel 2 zu übermitteln. Eine andere Ausprägung sieht die Übertragung mehrerer diskreter Signale 22 vor, die beispielsweise unterschiedlichen Betriebszuständen zugeordnet sind.

Eine weitere Ausprägung im Sinne von Industrie 4.0 sieht eine wesentlich umfangreichere datentechnische Anbindung vor. Ein Beispiel dafür ist aus Sicht der Datenverarbeitung der Zusammenschluss von Produktionsmitteln 2, darunter auch der Spritzgießmaschine 4 zu einer logischen Arbeitszelle 1, wie dies bei der Einrichtung "Wittmann 4.0" vorgesehen ist. Die Einrichtung "Wittmann 4.0" und die dazugehörigen Verfahren ermöglichen beispielsweise über einen Datenanschluss eine automatische Erkennung und logische Zusammenfassung der Produktionsmittel 2 zu einer Arbeitszelle 1, wie dies beispielsweise aus der WO 2019/018868 A zu entnehmen ist. Mehrere Arbeitszellensteuerungen 26 (a bis d) können nebeneinander (horizontal) angeordnet sein und voneinander unabhängig arbeiten oder vertikal (in einer Baumstruktur), bestehend aus mehreren Ebenen angeordnet sein.

Die Spritzgießmaschine 4 stellt in der nachfolgenden Lastanalyse und dem Regelalgorithmus das primäre Produktionsmittel 2 dar. Die Abfolge der einzelnen Verfahrensschritte der Spritzgießmaschine 4 bestimmt direkt das Auftreten von nicht verschiebbaren Lastspitzen 21. Jedes weitere Produktionsmittel 2 kann in gewissen Ausmaßen eine flexiblere Lastabnahme akzeptieren, wobei dies eine Verschiebung, eine Vorreihung oder Reduzierung sein kann, wie dies schematisch in Fig. 3 zu einem weiteren Produktionsmittel 2 eingetragen wurde, um die Erfindung veranschaulichen zu können.

**Wenn in der folgenden Betrachtung von der "Spritzgießmaschine 4" die Rede ist, ist damit** auch eine Ausprägung gemeint, in der die Signale 22 der Spritzgießmaschine an eine übergeordnete Steuerung, z.B. Arbeitszellensteuerung 26 übermittelt werden und diese direkt an die Produktionsmittel 2 weiterleitet oder eine eigene Logik für die Bearbeitung der Signale 22 der Spritzgießmaschine 4 und Übertragung an die Produktionsmittel 2 anwendet. Die Logik für die Steuerung der Steuersignale 22 und weiterer etwaiger Informationen 22 (Sequenz, Höhe der Spitzenlast, usw.) wird Lastmanagement genannt. In einer Ausprägung der Erfindung überträgt das Lastmanagement bei Vorhandensein einer Lastspitze 21 ein Steuersignal 22 an die Produktionsmittel 2. Das Steuersignal 22 wird nach Möglichkeit voreilend ausgeschickt, damit die Produktionsmittel 2 entsprechende Aktionen zur Lastkontrolle vorbereiten können.

Der Zeitraum für das voreilende Signal 22 kann ungefähr im Bereich von 1 bis 0,5 Sekunden liegen. Diese Zeit bzw. Zeitdauer 25 dient auch dazu, diverse Verzögerungen auf den Übertragungsleitungen 27 zu kompensieren. Das Steuersignal 22 gibt das Vorhandensein einer Lastspitze 21 an, welches ein bestimmtes frei wählbares, einstellbares oder selbst ermitteltes Lastniveau 28 übersteigt. Ein selbst ermitteltes Lastniveau 28 muss so gewählt werden, sodass noch ausreichend Lastabnahmezeit für die anderen Produktionsmittel 2 übrigbleibt. Selbstverständlich wird dieses Niveau auch von der Anzahl an angeschlossener Produktionsmittel 2 beeinflusst. Insofern ist das Vorhandensein der Einrichtung "Wittmann 4.0" vorteilhaft, da in diesem Fall angeschlossene Produktionsmittel 2 der Arbeitszellensteuerung 26 und des Weiteren der Spritzgießmaschine 4 bekannt sind und gleich in die Berechnung einfließen können.

Grundsätzlich kann das Lastniveau 28 so gewählt werden, sodass die Dauer des Überschreitens dieses Lastniveaus 28 und somit des Anstehens des Steuersignals 22 für Lastspitzen 21 die Zeit von zirka 15% bis 25% eines Gesamtzyklus der Spritzgießmaschine 4 nicht übersteigt. Bei längerem Vorhandensein des Steuersignals 22 muss davon ausgegangen werden, dass die Produktionsmittel 2 das Steuersignal 22 gegebenenfalls ignorieren müssen und selbständig die internen Lastabnehmer einschalten, um die Prozessregelung nicht zu gefährden. Bei korrekter Auswahl des Niveaus bzw. Lastniveau 28 schalten die Produktionsmittel 2 je nach technischer Möglichkeit die internen Lastabnehmer ab, verzögern das Einschalten oder Verringern die Last.

Dabei ist es auch möglich, dass die Produktionsmittel 2 auch selbstlernend ausgeführt sind und von sich aus ein Auftreten einer Lastspitze 21 bei der Spritzgießmaschine 4 antizipativ vorsehen können, da das zeitliche Verhalten im Automatikbetrieb der Spritzgießmaschine 4 relativ deterministisch erfolgt. Bei einer vorausschauenden Regelung im Produktionsmittel 2 können Lastverursacher, z.B. Heizstäbe, schon kurz vor dem wahrscheinlichen Auftreten einer Lastspitze 21 bei der Spritzgießmaschine 4, die Last einschalten und dann wieder ausschalten. Durch die energetische Trägheit von Heizstäben bzw. generell von Thermoelementen, kann somit bereits ein Vorheizen erreicht werden, bevor nach Lastabfall der Spritzgießmaschine 4, der normale Regelablauf gestartet wird und der Sollzustand des Regelparameters dadurch rascher erreicht werden kann.

Beispielsweise ist es also möglich, dass bei Übersendung eines Signals 22 von der Spritzgießmaschine 4 oder der Arbeitszellensteuerung 26 an ein Temperiergerät 13a, diesem mitgeteilt wird, dass die nächste Produktionsphase 19 über dem voreingestellten Lastniveau 28 liegt, sodass ev. anstehende Regelungen im Temperiergerät 13a vorgezogen oder verschoben oder aufgeteilt werden sollten, wenn dies die entsprechenden Parametervorgaben im Temperiergerät 13a zulassen. Somit kann nach Erhalt des Signals 22 das Temperiergerät 13a beispielsweise seine Heizstäbe vorheizen und während der Produktionsphase 19, bei dem das Lastniveau 28 überschritten wird, abschalten bzw. reduzieren, um nachfolgend den Regel- bzw. Steuerprozess fertig zu stellen. Dadurch wird erreicht, dass in jenen Bereichen, in denen das Lastniveau 28 überschritten wird, die weiteren Produktionsmittel 2 versuchen, vorzugsweise keine bzw. notwendigerweise nur einen geringen Energiebedarf aufzunehmen, um ein weiteres Aufsummieren des Energieverbrauches zu verhindern.

Das Lastmanagement kann des Weiteren die Höhe der Lastspitze 21 oder die Differenz aus Lastspitze 21 und Grundlast oder eine andere Größe, die direkt oder indirekt auf den folgenden Lastbedarf schließen lässt, an die Produktionsmittel 2 melden. Die Ermittlung der Lastspitze 21 kann entweder kalkulatorisch oder durch eine vorangegangene Leistungsmessung erfolgt sein. Auch die Differenz zwischen Lastspitze 21 und Grundlast (Lastreserve) wird errechnet oder durch Messung ermittelt. Typischerweise ist die Lastreserve wesentlich größer als die Lastabnahme eines einzelnen Produktionsmittels 2. D.h. in den Phasen, in denen die Spritzgießmaschine 4 keine Lastspitzen 21 verursacht, können mehrere Produktionsmittel 2 gleichzeitig laufen und trotzdem nicht das maximale Spitzenlastniveau 21 der Spritzgießmaschine 4 erreichen. Somit ist es von Vorteil, wenn die Arbeitsprozesse der weiteren Produktionsmittel 2 in jene Produktionsbereiche 19 verlegt werden, in denen keine Lastspitzen 21 von der Spritzgießmaschine zu erwarten sind.

Die Produktionsmittel 2 können nach dem Lastabfall der Spritzgießmaschine 4 in einer weiteren Ausprägung sequenziell für die Lastabnahme angesprochen werden, d.h., dass beispielsweise nach dem Unterschreiten der Lastspitze 21 ein entsprechendes weiteres Signal 29 mit entsprechenden Informationen ausgesendet wird. Die Sequenz bestimmt sich statisch oder dynamisch durch eine gegebene Priorität der einzelnen Produktionsmittel 2. Diese kann durch den Grad der Prozessrelevanz des Produktionsmittels 2 oder der Höhe der Lastabnahme bestimmen. Die Lastreserve wird in der Reihenfolge der Priorität an die Produktionsmittel 2 weitergereicht, wobei diese bei Lastbedarf diesen eigenen Lastbedarf von der Lastreserve abziehen und an die nachfolgenden Produktionsmittel 2 weitergeben. In diesem Fall muss die Übertragung der Lastreserve zyklisch von der Spritzgießmaschine 4 angeordnet werden.

Das Verfahren baut auf der Fähigkeit der einzelnen Produktionsmittel 2 auf, über lastbeeinflussbare Komponenten zu verfügen und den internen Prozess an Hand von entsprechenden Steuersignalen 22, 29 zu beeinflussen. Je höher die Anzahl eines Produktionsmittels 2 an solcherart lastbeeinflussbaren Komponenten ist, umso größer ist die Wahrscheinlichkeit, eine von der Spritzgießmaschine 4 und dem Lastmanagement gewünschte Reaktion des Produktionsmittels 2 zu erhalten.

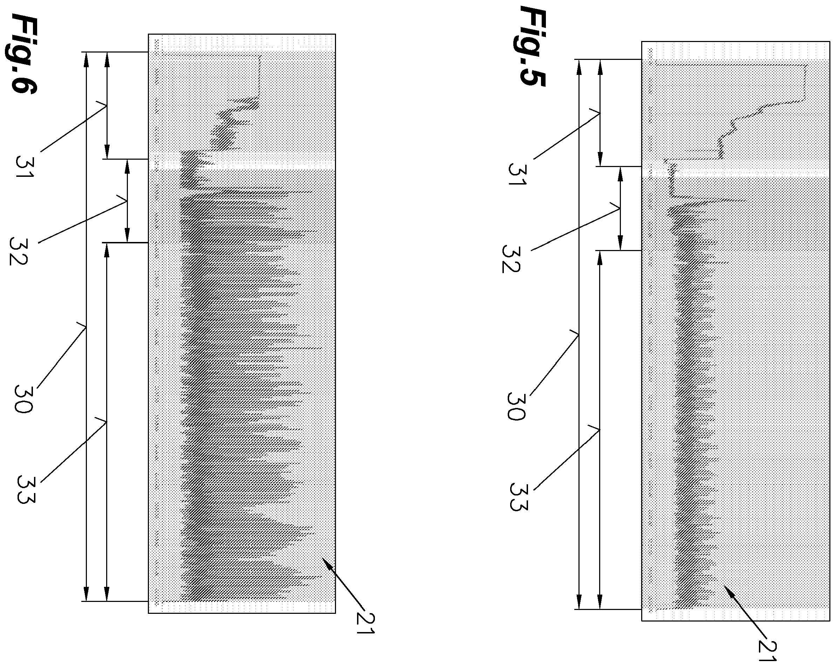

Weiters ist in Fig. 5 ein gemittelter Energieverbrauch gezeigt, wogegen in Fig. 6 ein nicht gemittelter Energieverbrauch dargestellt ist.

In der Betrachtung des Energieverbrauches von Produktionsmitteln 2, im Besonderen eines primären Produktionsmittels 2, z.B. eine Spritzgießmaschine 4, wird im Regelfall von Durchschnittswerten ausgegangen. Typischerweise wird ein Bewertungszeitraum 30 von 15 Minuten verwendet, da auch Versorgungsfirmen in zahlreichen Ländern für die Abrechnung des Stromverbrauches mit dem Durchschnittsverbrauch im jeweiligen 15 Minuten Zeitraum arbeiten. Aus diesem Blickwinkel benötigt das Hochfahren 31 der Spritzgießmaschine 4 die meiste Energie. Nach dem Anlaufen 32 der Produktion und dem Erreichen eines konstanten Produktionszyklus 33 nimmt der Durchschnittsverbrauch ein niedrigeres gemitteltes Lastniveau an. Fig. 5 stellt die Durchschnittsverbräuche mit einem Bewertungszeitraum 30 von 5 Sekunden dar. Bei einer längeren Durchschnittsberechnung, beispielsweise bei Anwendung des üblichen Bewertungszeitraumes 30 von 15 Minuten, werden die Werte entsprechend geglätteter dargestellt. Konkret wird die stabile Produktionsphase 19 einen niedrigeren Wert, als in Fig. 6 dargestellt, anzeigen. Das Lastspitzenmanagement von marktüblichen Systemen konzentriert sich deshalb auch auf die Vermeidung, insbesondere durch Lastverschiebung, Lastreduktion, Lastabwurf, Lastaufteilung, von gleichzeitig auftretenden Phasen mit einem hohen durchschnittlichen Energieniveau.

Fig. 6 verdeutlicht hingegen den Energieverbrauch eines primären Produktionsmittels 2, z.B. eine Spritzgießmaschine 4, ohne Filterung, wobei sich ein sehr unterschiedliches Bild ergibt.

Speziell während der üblichen Produktionszyklen 33 treten die Lastspitzen 21 verstärkt hervor. Erkennbar ist, dass nicht innerhalb der Anlaufphase 32 der Spritzgießmaschine 4, die höchsten Lastspitzen 21 auftreten, sondern erst im Regelbetrieb bzw. im Produktionszyklus 33 der Maschine. Das ist insofern von Bedeutung, da die höchste Lastspitze 21 beim Strombedarf des Unternehmens, die Höhe des Netznutzungsentgeltes vom Netzbetreiber oder dem Stromversorger bestimmt. Die Kosten des Netznutzungsentgeltes übersteigen in vielen Fällen die Kosten des aktuellen Stromverbrauches. Vorteilhaft ist somit die Überschneidung von Lastspitzen 21 von primären Produktionsmitteln, z.B. eine Spritzgießmaschine 4, und der an der Produktion beteiligten Produktionsmittel 2 zu verhindern.

Vollständigkeit halber wird erwähnt, dass in dieser Betrachtungsweise die weiteren notwendigen Verbindungen zwischen der Spritzgießmaschine 4, dem Formwerkzeug 7, den Produktionsmitteln 2 oder weiteren für die Produktion wichtigen Komponenten nicht ausgeführt und dargestellt sind. Diese sind typischerweise elektrische und/oder Wasser- und/oder und/oder Hydraulik- und/oder Luftverbindungen und essentiell notwendig für die korrekte Funktionalität der gesamten Produktionszelle.

Man kann also ausführen, dass erfindungsgemäß ein Verfahren zur Vermeidung von Parallelität von Lastspitzen 21 einer Kunststoffverarbeitungsmaschine, insbesondere Spritzgießmaschine 4 oder Formgebungsmaschine und zumindest einem Produktionsmittel 2, wie beispielsweise Temperiergeräte 13a, Heißkanalsysteme, Kühlgeräte 13b, Durchflussregler 14, Granulat-Trockner 12, Werkzeug-Trockner, Dosiergeräte 11, Roboter 5, Automatisierungssysteme, usw., beschrieben wurde, wobei die Spritzgießmaschine 4 über eine elektrische Leitung 27 oder Datenleitung 27 mit dem zumindest einen Produktionsmittel 2 direkt oder indirekt über eine externe Arbeitszellensteuerung 26 verbunden wird, wobei die Spritzgießmaschine 4 oder Formgebungsmaschine ein voreilendes Steuersignal 22 oder einen internen Betriebszuständen 22 mit erhöhtem Lastbedarf, an die Produktionsmittel 2 sendet, sodass das zumindest eine Produktionsmittel 2 zu den Zeitpunkten 24 des erhöhten Lastbedarfs der Spritzgießmaschine 4, eine Lastverschiebung, Lastminderung oder einen Lastabwurf durchführt. Vorteilhaft ist somit das Überschneiden von Lastspitzen 21 einer Spritzgießmaschine 4 und der an der Produktion beteiligten Produktionsmittel 2 zu verhindern.

Der Ordnung halber wird darauf hingewiesen, dass die Erfindung nicht auf die dargestellten Ausführungsvarianten beschränkt ist, sondern auch weitere Ausbildungen und Aufbauten beinhalten können. Der Umfang der Erfindung ist in den beigefügten Ansprüchen definiert.

## Patentansprüche

1. Verfahren zur Vermeidung von Parallelität von Lastspitzen (21) einer Kunststoffverarbeitungsmaschine, insbesondere Spritzgießmaschine (4) und zumindest einem autarken, mit einer eigenen Steuerung betriebenen Produktionsmittel (2), beispielsweise Temperiergerät (13a), Heißkanalsystem, Kühlgerät (13b), Durchflussregler (14), Granulat-Trockner (12), Werkzeug-Trockner, Dosiergerät (11), Roboter (5), Automatisierungssystem, usw., wobei die Spritzgießmaschine (4) über eine elektrische Leitung (27) oder Datenleitung (27) mit dem zumindest einen unabhängigen Produktionsmittel (2) direkt oder indirekt über eine externe Arbeitszellensteuerung (26) verbunden wobei die Spritzgießmaschine (4) oder die externe Arbeitszellensteuerung (26) ein oder mehrere voreilende Steuersignale (22) oder interne Betriebszustände (22) mit erhöhtem Lastbedarf, an das oder die Produktionsmittel (2) sendet, sodass das oder die unabhängigen Produktionsmittel (2) zu den Zeitpunkten (24) des erhöhten Lastbedarfs der Spritzgießmaschine (4), eine Lastverschiebung, Lastminderung oder einen Lastabwurf durchführen.

2. Verfahren nach Anspruch 1 **dadurch gekennzeichnet, dass** das Lastniveau (28) für die Aktivierung des oder der Steuersignale (22) oder die Veränderung des oder der internen Betriebszustände (22) für die Übermittlung bzw. Anzeige des Vorhandenseins einer Lastspitze (21) in der Spritzgießmaschine (4) oder einer Arbeitszellensteuerung (26) frei wählbar, einstellbar oder selbst ermittelt wird.

3. Verfahren nach Anspruch 1 oder 2, **dadurch gekennzeichnet, dass** die Spritzgießmaschine (4) während eines oder mehrerer Arbeitszyklen (18), insbesondere dem Betrieb zwischen zwei aufeinander folgenden Schließvorgängen des Formwerkzeuges (7), das vorliegende Lastniveau laufend rechnerisch ermittelt oder messtechnisch erfasst und für nachfolgende Analysen, insbesondere für die Ermittlung der Umschaltung des oder der Steuersignale (22) oder der internen Betriebszustände (22), speichert.

4. Verfahren nach Anspruch 1 oder 2, **dadurch gekennzeichnet, dass** eine externe Arbeitszellensteuerung (26) während eines oder mehrerer Arbeitszyklen (18) der Spritzgießmaschine (4), insbesondere dem Betrieb zwischen zwei aufeinander folgenden Schließvorgängen des Formwerkzeuges (7), das vorliegende Lastniveau laufend messtechnisch erfasst und für nachfolgende Analysen, insbesondere für die Ermittlung der Umschaltung des oder der Steuersignale (22) oder der internen Betriebszustände (22), speichert.

5. Verfahren nach einem der vorhergehenden Ansprüche **dadurch gekennzeichnet, dass** die Spritzgießmaschine (4) oder eine externe Arbeitszellensteuerung (26) das oder die Steuersignale (22) oder interne Betriebszustände (22) mit erhöhtem Lastbedarf auch voreilend aussenden bzw. anzeigen kann, damit die unabhängigen Produktionsmittel (2) entsprechende Aktionen zur Lastkontrolle vorbereiten können.

6. Verfahren nach einem der vorhergehenden Ansprüche **dadurch gekennzeichnet, dass** die autarken Produktionsmittel (2) auch selbstlernend ausgeführt sind und von sich aus, vorzugsweise nach dem zumindest einmaligen Mitverfolgen des Verhaltens des oder der Steuersignale (26) oder der internen Betriebszustände (26) in einem Arbeitszyklus (18) der Spritzgießmaschine (4), ein Auftreten einer Lastspitze (21) bei der Spritzgießmaschine (4) antizipativ vorsehen und selbsttätig eine Lastkontrolle vornehmen können.

7. Verfahren nach einem der vorhergehenden Ansprüche **dadurch gekennzeichnet, dass** bei Selbstermittlung der Umschaltpunkte des oder der Steuersignale (22) oder der internen Betriebszustände (22) in Abhängigkeit des Lastniveaus (27) durch die Spritzgießmaschine (4) oder eine externe Arbeitszellensteuerung (26), das kumulative Anstehen des oder der Steuersignale (22) oder der internen Betriebszustände (22) für Lastspitzen (21) die Zeit von zirka 15% bis 25% eines Gesamtzyklus (18) der Spritzgießmaschine (4) nicht übersteigt.

8. Verfahren nach einem der vorhergehenden Ansprüche **dadurch gekennzeichnet, dass** die Spritzgießmaschine (4) die Differenz aus maximaler Lastspitze (21) in einem Arbeitszyklus (18) und aktuell errechneter oder gemessener Last oder einer anderen Größe, die direkt oder indirekt auf den aktuell nicht benötigten Lastbedarf schließen lässt, an eine Arbeitszellensteuerung (26) meldet.

9. Verfahren nach einem der vorhergehenden Ansprüche **dadurch gekennzeichnet, dass** eine externe Arbeitszellensteuerung (26) die Differenz aus maximaler Lastspitze (21) in einem Arbeitszyklus (18) der Spritzgießmaschine (4) und aktuell gemessener Last der Spritzgießmaschine (4) ermittelt und daraus den aktuell nicht benötigten Lastbedarf der Spritzgießmaschine (4) bildet.

10. Verfahren nach einem der vorhergehenden Ansprüche **dadurch gekennzeichnet, dass** eine externe Arbeitszellensteuerung (26) das oder die Steuersignale (29) zu unterschiedlichen Zeitpunkten an die unabhängigen Produktionsmittel (2) übermittelt und zwar in Abhängigkeit der Lastabnahme der jeweils aktiven Produktionsmittel (2), sodass die Gesamtlast der Produktionsmittel (2) den von der Spritzgießmaschine (4) nicht benötigen Lastbedarf nicht überschreitet.

11. Kunststoffverarbeitungsanlage, umfassend zumindest Spritzgießmaschine (4) und zumindest ein autarkes, mit einer eigenen Steuerung betriebenen Produktionsmittel (2), wie beispielsweise Temperiergerät (13a), Heißkanalsystem, Kühlgerät (13b), Durchflussregler (14), Granulat-Trockner (12), Werkzeug-Trockner, Dosiergerät (11), Roboter (5), Automatisierungssysteme, usw., wobei die Spritzgießmaschine (4) über eine elektrische Leitung (27) oder Datenleitung (27) an das zumindest eine unabhängige Produktionsmittel (2) direkt oder indirekt über eine externe Arbeitszellensteuerung (26) angebunden ist, wobei , Spritzgießmaschine (4) zum Durchführen des Verfahrens nach einem der Ansprüche 1 bis 10 ausgebildet ist.

## Claims

1. Method for avoiding parallel occurrence of load peaks (21) of a plastics processing machine, in particular an injection-molding machine (4) and at least one stand-alone production resource operated with its own control system (2), for example a temperature control unit (13a), hot runner system, cooling unit (13b), flow controller (14), granule dryer (12), mold dryer, metering device (11), robot (5), automation system, etc., wherein the injection-molding machine (4) is connected via an electrical line (27) or data line (27) to the at least one independent production resource (2) directly or indirectly via an external work cell controller (26), wherein the injection-molding machine (4) or the external work cell controller (26) transmits one or several leading control signals (22) or internal operating states (22) with increased load requirement to the production resource (2) so that the independent production resource (2) performs a load shift, load reduction, or load shedding at the times (24) of the increased load requirement of the injection-molding machine (4).

2. Method according to claim 1, **characterized in that** the load level (28) for the activation of the control signal or control signals (22) or the change of the internal operating state or operating states (22) for the transmission or indication, respectively, of the presence of a load peak (21) in the injection-molding machine (4) or a work cell controller (26) is freely selectable, adjustable or automatically determined.

3. Method according to claim 1 or 2, **characterized in that** the injection-molding machine (4) continuously determines by calculation or ascertains by measurement the load level present during one or several operating cycles (18), in particular the operation between two successive closing operations of the mold (7), and stores it for subsequent analyses, in particular for determining the switching of the control signal or control signals (22) or the internal operating states (22).

4. Method according to claim 1 or 2, **characterized in that** an external work cell controller (26) continuously ascertains by measurement the load level present during one or several operating cycles (18) of the injection-molding machine (4), in particular the operation between two successive closing operations of the mold (7), and stores it for subsequent analyses, in particular for determining the switching of the control signal or control signals (22) or the internal operating states (22).

5. Method according to any one of the preceding claims, **characterized in that** the injection-molding machine (4) or an external work cell controller (26) can also send or indicate, respectively, the control signal or control signals (22) or internal operating states (22) with increased load requirement in advance, so that the independent production resources (2) can prepare corresponding actions for load control.

6. Method according to any one of the preceding claims, **characterized in that** the stand-alone production resources (2) are also designed to be self-learning and, preferably after tracking the behavior of the control signal or control signals (26) or the internal operating states (26) at least once in an operating cycle (18) of the injection-molding machine (4), can anticipate the occurrence of a load peak (21) in the injection-molding machine (4) and automatically carry out a load control.

7. Method according to any one of the preceding claims, **characterized in that**, in the case of automatic determination of the switching points of the control signal or control signals (22) or of the internal operating states (22) as a function of the load level (27) by the injection-molding machine (4) or an external work cell controller (26), the cumulative presence of the control signal or signals (22) or of the internal operating states (22) for load peaks (21) does not exceed the time of approximately 15% to 25% of a total cycle (18) of the injection-molding machine (4).

8. Method according to any one of the preceding claims, **characterized in that** the injection-molding machine (4) reports the difference between the maximum load peak (21) in an operating cycle (18) and the currently calculated or measured load or another measure and which directly or indirectly indicates the currently unneeded load requirement to a work cell controller (26).

9. Method according to any one of the preceding claims, **characterized in that** an external work cell controller (26) determines the difference between the maximum load peak (21) in an operating cycle (18) of the injection-molding machine (4) and the currently measured load of the injection-molding machine (4) and uses this to form the currently unneeded load requirement of the injection-molding machine (4).

10. Method according to any one of the preceding claims, **characterized in that** an external work cell controller (26) transmits the control signal or control signals (29) to the independent production resources (2) at different times, depending on the load consumption of the respectively active production resource (2), so that the total load of the production resources (2) does not exceed the load requirement not needed by the injection-molding machine (4).

11. Plastics processing plant comprising at least an injection-molding machine (4) and at least one stand-alone production resource operated with its own control system (2), such as a temperature control unit (13a), hot runner system, cooling unit (13b), flow controller (14), granule dryer (12), mold dryer, metering device (11), robot (5), automation systems, etc., wherein the injection-molding machine (4) is connected via an electrical line (27) or data line (27) to the at least one independent production resource (2) directly or indirectly via an external work cell controller (26), whereby the injection-molding machine (4) is designed for carrying out the method according to any one of claims 1 to 10.

## Revendications

1. Procédé visant à éviter le parallélisme des pics de charge (21) d'une machine de transformation de plastiques, en particulier d'une machine de moulage par injection (4) et d'au moins un moyen de production autonome (2) équipé de sa propre commande, par exemple un thermorégulateur (13a), un système à canaux chauffants, un appareil de refroidissement (13b), un régulateur de débit (14), un séchoir à granulés (12), un séchoir à outils, un doseur (11), un robot (5), un système d'automatisation, etc., la machine de moulage par injection (4) étant reliée par une ligne électrique (27) ou une ligne de données (27) à au moins un moyen de production autonome (2), directement ou indirectement par l'intermédiaire d'une commande de cellules de travail externe (26), la machine de moulage par injection (4) ou la commande de cellules de travail externe (26) envoyant un ou plusieurs signaux de commande anticipés (22) ou des états de fonctionnement internes (22) avec une demande de charge accrue, au(x) moyen(s) de production (2), de sorte que le ou les moyens de production autonomes (2) effectuent, aux moments (24) de la demande de charge accrue de la machine de moulage par injection (4), un transfert de charge, une réduction de charge ou un délestage.

2. Procédé selon la revendication 1 **caractérisé en ce que** le niveau de charge (28) pour l'activation du ou des signaux de commande (22) ou la modification du ou des états de fonctionnement internes (22) pour la transmission ou l'affichage de la présence d'un pic de charge (21) dans la machine de moulage par injection (4) ou d'une commande de cellules de travail (26) est librement sélectionnable, réglable ou déterminé de manière autonome.

3. Procédé selon la revendication 1 ou 2, **caractérisé en ce que** la machine de moulage par injection (4) détermine en permanence par calcul ou détecte, au moyen d'instruments de mesure, le niveau de charge disponible et l'enregistre pour des analyses ultérieures, en particulier pour la détermination de la commutation du ou des signaux de commande (22) ou des états de fonctionnement internes (22), pendant un ou plusieurs cycles de travail (18), en particulier le fonctionnement entre deux opérations de fermeture successives de l'outil de moulage (7).

4. Procédé selon la revendication 1 ou 2, **caractérisé en ce qu'**une commande de cellules de travail externe (26) détecte, au moyen d'instruments de mesure, le niveau de charge disponible et l'enregistre pour des analyses ultérieures, en particulier pour la détermination de la commutation du ou des signaux de commande (22) ou des états de fonctionnement internes (22), pendant un ou plusieurs cycles de travail (18) de la machine de moulage par injection (4), en particulier le fonctionnement entre deux opérations de fermeture successives de l'outil de moulage (7).

5. Procédé selon l'une des revendications précédentes, **caractérisé en ce que** la machine de moulage par injection (4) ou une commande de cellules de travail externe (26) peut également émettre ou afficher de manière anticipée le ou les signaux de commande (22) ou des états de fonctionnement internes (22) avec une demande de charge accrue, afin que les moyens de production autonomes (2) puissent préparer des actions correspondantes en vue du contrôle de la charge.

6. Procédé selon l'une des revendications précédentes, **caractérisé en ce que** les moyens de production autonomes (2) sont également autoadaptatifs et peuvent, d'eux-mêmes, de préférence après avoir suivi au moins une fois le comportement du ou des signaux de commande (26) ou des états de fonctionnement internes (26) au cours d'un cycle de travail (18) de la machine de moulage par injection (4), prévoir de manière anticipative l'apparition d'un pic de charge (21) sur la machine de moulage par injection (4) et procéder automatiquement à un contrôle de charge.

7. Procédé selon l'une des revendications précédentes, **caractérisé en ce que**, lors de l'auto-détermination des points de commutation du ou des signaux de commande (22) ou des états de fonctionnement internes (22) en fonction du niveau de charge (27) par la machine de moulage par injection (4) ou une commande de cellules de travail externe (26), la présence cumulée du ou des signaux de commande (22) ou des états de fonctionnement internes (22) pour des pics de charge (21) ne dépasse pas le temps d'environ 15 % à 25 % d'un cycle total (18) de la machine de moulage par injection (4).

8. Procédé selon l'une des revendications précédentes, **caractérisé en ce que** la machine de moulage par injection (4) signale à une commande de cellules de travail (26) la différence entre le pic de charge maximal (21) au cours d'un cycle de travail (18) et la charge actuellement calculée ou mesurée ou une autre grandeur, qui permet de déduire directement ou indirectement la demande de charge actuellement non requise.

9. Procédé selon l'une des revendications précédentes, **caractérisé en ce qu'**une commande de cellules de travail externe (26) détermine la différence entre le pic de charge maximal (21) au cours d'un cycle de travail (18) de la machine de moulage par injection (4) et la charge actuellement mesurée de la machine de moulage par injection (4) et forme, à partir de ces informations, la demande de charge actuellement non requise de la machine de moulage par injection (4).

10. Procédé selon l'une des revendications précédentes, **caractérisé en ce qu'**une commande de cellules de travail externe (26) transmet, à différents moments, le ou les signaux de commande (29) aux moyens de production autonomes (2) et ce, en fonction de la diminution de la charge des moyens de production (2) respectivement actifs, de sorte que la charge totale des moyens de production (2) ne dépasse pas la demande de charge non requise par la machine de moulage par injection (4).

11. Ligne de transformation de plastiques, comprenant au moins une machine de moulage par injection (4) et au moins un moyen de production (2) autonome, équipé de sa propre commande, comme par exemple un thermorégulateur (13a), un système à canaux chauffants, un appareil de refroidissement (13b), un régulateur de débit (14), un séchoir à granulés (12), un sécheur à outils, un doseur (11), un robot (5), des systèmes d'automatisation, etc., la machine de moulage par injection (4) étant reliée par une ligne électrique (27) ou une ligne de données (27) à au moins un moyen de production autonome (2), directement ou indirectement par l'intermédiaire d'une commande de cellules de travail externe (26), la machine de moulage par injection (4) étant conçue en vue de l'exécution du procédé selon l'une des revendications 1 à 10.
